# EUROPEAN PATENT APPLICATION

(11) **EP 2 383 524 A2**
(43) Date of publication of application: **02.11.2011**
(21) Application number: 11163276.6
(22) Date of filing: 20.04.2011
(51) Int. Cl.: F24D 19/06

(54) **Air circulating device**

(30) Priority: 27.04.2010 GB 1006997
(71) Applicant: Haydon, David James, Essex SS4 1EH (GB)
(72) Inventor: Haydon, David James, Essex SS4 1EH (GB)
(74) Representative: Jackson, Nicholas Andrew

(57) **Abstract**

The heated air circulating device 10 comprises a housing 12 defining a chamber therein. The lower face of the housing provides a slot 32 which extends for the full length of the housing 12. In use, the device is positioned above and at least partially behind a wall mounted radiator 40 such that the slot 32 locates above the area between the radiator 40 and the wall 42. As the radiator 40 heats up, warm air is generated behind the radiator 40 which rises and passes through the slot 32 and into the chamber. The device 10 includes a fan 14 located towards one end which draws air along the chamber and expels the air out to the side. Since the slot 32 extends for the full length of the housing the rising warm air is not restricted from entering through the slot 32. In addition, the slot 32 includes guide means which increases the pressure of the warm air as it passes through the slot 32 and the pressure then falls once the air enters the chamber. This thereby draws the warm air upwardly and significantly increases the efficiency of the heated air circulating device 10.

## Description

### Field of the Invention

The present invention relates to heated air circulating devices, assemblies comprising a heat source and a heated air circulating device and a method of circulating heated air.

### Background to the Invention

Most residential and commercial buildings are at least partially heated by radiators. The radiators themselves may be heated by various systems for example oil, hot water or electric elements. The radiators are designed to have a large surface area to heat the surrounding air. Convection currents are created in the room in which the radiator is located as the warm air rises and cooler air is drawn towards the radiator.

Typically radiators comprise one or two planar panels through which a warm fluid circulates. For convenience, these panels are usually placed adjacent a wall in a room, to permit easy connection to the heating system. Most commonly, radiators are attached to the wall at one or two points by brackets extending between a rear face of a radiator panel and the wall.

However, the positioning of a radiator adjacent a wall has an inherent problem. The air that is heated by the rear face of the radiator does not efficiently circulate around the room and, as such, a large portion of this warm air remains behind the radiator panel and heats up the wall. This problem is worsened by the presence of the brackets fixing the radiator to the wall, which are often located at either end of the radiator and substantially block the gap between the radiator and the wall.

The present invention seeks to overcome these problems by providing a device that aids in the circulation of air heated by a confined surface of a radiator.

It is an aim of the present invention to overcome at least one problem associated with the prior art whether referred to herein or otherwise.

### Summary of the Invention

According to a first aspect of the present invention there is provided a heated air circulating device locatable above a wall mounted radiator, the device comprising a housing defining an internal chamber and an inlet provided on the housing and through which air heated by the radiator enters the chamber, the housing comprising an outlet through which air is expelled from the chamber and wherein the inlet comprises a continuous slot which extends along the full length of the housing.

Preferably the slot is arranged, in use, to locate directly above the area located between the radiator and the wall.

Preferably the slot is provided on a lower face of the housing.

Preferably the slot is arranged, in use, to face downwardly towards the radiator and/or the area adjacent to the rear face of the radiator.

Preferably the slot is uniform along the length of the housing.

Preferably the slot has a constant width and shape along the length of the housing.

The housing may comprise guide means to guide the heated air through the slot into the chamber.

The guide means may comprise a flange or two opposed flanges which guide the heated air into the chamber.

The first flange may project inwardly from a lower part of a first side wall of the housing and the second flange may project inwardly from a lower part of a second side wall of the housing.

Preferably the first flange projects inwardly from the first side wall towards the second side wall and the first flange also comprises a section which is angled upwardly towards the chamber.

Preferably the second flange projects inwardly from the second side wall towards the first side wall and the second flange also comprises a section which is angled upwardly towards the chamber.

Preferably the slot is defined between the first flange and the second flange and the width of the slot is arranged to narrow from the outside in to the chamber defined by the housing.

Preferably the size and shape of the first flange is identical to the size and shape of the second flange.

Preferably the first flange and/or the second flange comprises an edge extending inwardly into the chamber in order to aid the flow of heated air in to the chamber and preferably to minimise the creation of turbulence as the heated air enters the chamber.

Preferably the guide means comprises a first flange and a second flange which define a Venturi inlet therebetween.

Preferably the slot is arranged to increase the pressure of the heated air as it passes through the slot. Preferably the pressure of the heated air is arranged to decrease as it enters the chamber.

The slot may be located centrally on a lower face of the housing.

The slot may be located centrally offset on a lower face of the housing. The slot may be arranged to be located centrally offset in a direction away from the radiator, in use.

The housing may comprise an extruded member. Preferably the slot is formed by extruding the housing.

The housing may comprise an elongate member having a first end and a second end.

Preferably the housing comprises two opposing side walls extending along the length of the housing.

Preferably the housing comprises an upper face which connects the upper edges of the opposing side walls.

Preferably the chamber is defined between the opposing side walls and the upper face of the housing.

Preferably the size and/or shape of the lateral cross section of the chamber and/or the housing is uniform throughout the housing/chamber.

Preferably the size and/or shape of the longitudinal cross section of the chamber and/or the housing is uniform throughout the housing/chamber.

Preferably the heated air circulating device comprises air flow means. Preferably the air flow means is arranged to cause airflow through the chamber.

The air flow means may be located towards one end of the housing and may be arranged to draw air from the chamber and to flow out of an end of the housing.

The air flow means may comprise a first air flow means and a second air flow means wherein the first airflow means is located towards a first end of the housing and the second air flow means is located towards a second end of the housing. The first air flow means may be arranged to draw air from the chamber and to flow out of a first end of the housing and the second air flow means may be arranged to draw air from the chamber and out of a second end of the housing.

The air flow means may comprise a first air flow means and a second air flow means wherein the first air flow means and the second air flow means may be located adjacent to each other and the first air flow means may direct air into the second air flow means.

Preferably the or each air flow means comprises a fan.

The air flow means may be retained within a noise reducing mounting. The noise reducing mounting may comprise a resilient frame. The noise reducing mounting may comprise a rubber frame. The noise reducing housing may comprise at least one leg and preferably comprises a plurality of legs which are arranged, in use, to extend outwardly from the air flow means. The or each leg may include fixing means at an outer end thereof. The fixing means may fix the air flow means within an end cap. A first leg may be of a difference thickness to a second leg. A first leg may of a different length to a second leg. Each leg may be of a different thickness and/or length to the other legs. The frame may comprise four legs wherein each leg is of a different thickness and of a different length to the other legs. The frame may comprise a central annular portion. The central annular portion may encompass the air flow means. The thickness of the central annular portion may vary around the circumference thereof. The noise reducing mounting may comprise a mass damper secured thereto.

Preferably the heated air circulating device comprises a sensor means in order to activate the air flow means. Preferably the sensor means comprises a thermal sensor in order to activate the air flow means only when the heated air is above a first predetermined temperature.

The sensor means may be arranged to deactivate the air flow means when the temperature falls below the first predetermined temperature.

The sensor means may comprise a thermal sensor located within insulating means. The insulating means may be arranged to retain heat adjacent to the thermal sensor in order to delay the deactivation of the air flow means as the heated air and/or radiator is cooling.

The sensor means may comprise a dwell system in order to prolong the activation time as the radiator is cooling and/or delay the deactivation of the air flow means.

The sensor means may be arranged to deactivate the air flow means when the temperature falls below a second predetermined temperature wherein the second predetermined temperatures is lower than the first predetermined temperature. Preferably the second predetermined temperature is more than 1 °C and more preferably is substantially 4 °C lower than the first predetermined temperature.

The sensor means may comprise time delay means. Preferably the time delay means may be arranged to set a time from the deactivation of the air flow means during which the air flow means cannot be reactivated.

The sensor means may be variable and may enable a user to select the first predetermined temperature and/or the second predetermined temperature.

The heated air circulating device may comprise indicator means to indicate the operational status of the device. The indicator means may indicate that power is being supplied to the air flow means. The indicator means may indicate when the air flow means is operational.

The indicator means may comprise illuminated indicator means. The illuminated indictor means may comprise one or more light emitting diodes.

The indicator means may comprise an audible indicator.

The airflow means may comprise a fan enclosed within a fan housing. The fan housing may be integral with the housing of the heated air circulating device.

The heated air circulating device may comprise connection means in order to connect a first housing to at least a second housing. Preferably the connection means is arranged to connect a first housing to at least a second housing in a linear arrangement such that the housings create a single chamber therein.

The connection means may comprise a connector into which an end of the housings may be retained.

The housing may comprise an end member at one or both ends thereof. The end member may comprise an end stop in order to prevent air flow out of the respective end of the housing. The end member may comprise a vented end member in order to allow airflow out of the respective end of the housing. The vented end member may comprise an array of apertures.

An end member may include a first series of air guides or vents. An end member may comprise a first series of air guides or vents and a second series of air guides or vents. Preferably a user can direct the air flow outwardly in a horizontal direction and/or a vertical direction.

The speed of the or each fan may be variable.

The heated air circulating device may include a noise reducing support member to reduce the transmission of vibrations/noise from the heated air circulating device to a supporting structure (for example, a radiator). The noise reducing support member may comprise a resilient band which is arranged, in use, to extend around the outer periphery of the housing and preferably stands proud of the housing. The heated air circulating device may comprise a first noise reducing support member and a second noise reducing support member. The or each noise reducing support member may be located at or towards an end of the heated air circulating device.

According to a second aspect of the present invention there is provided an assembly comprising a radiator and a heated air circulating device locatable above the radiator, wherein the radiator is arranged, in use, to be mounted on a wall, the device comprising a housing defining an internal chamber and an inlet provided on the housing and through which air heated by the radiator enters the chamber, the housing comprising an outlet through which air is expelled from the chamber and wherein the inlet comprises a continuous slot which extends along the full length of the housing.

According to a third aspect of the present invention there is provided a method of circulating heated air, comprising locating a heated air circulating device above a wall mounted radiator, drawing heated air through an inlet in the device in order for the air to pass into an internal chamber defined in a housing of the device and to then be expelled from an outlet, wherein the inlet comprises a continuous slot which extends along the full length of the housing.

According to a fourth aspect of the present invention there is provided a heated air circulating device locatable above a wall mounted radiator, the device comprising a housing defining an internal chamber and an inlet provided on the housing and through which air heated by the radiator enters the chamber, the housing comprising an outlet through which air is expelled from the chamber and wherein the device comprises a sensor means in order to activate the air flow means, the sensor means comprising a thermal sensor in order to activate the air flow means only when the heated air is above a first predetermined temperature, in which the thermal sensor is located within insulating means in order for the insulating means to retain heat adjacent to the thermal sensor in order to delay the deactivation of the air flow means as the heated air and/or radiator is cooling.

Preferably the inlet comprises a continuous slot which extends along the full length of the housing.

According to a fifth aspect of the present invention there is provided a heated air circulating device locatable above a wall mounted radiator, the device comprising a housing defining an internal chamber and an inlet provided on the housing and through which air heated by the radiator enters the chamber, the housing comprising an outlet through which air is expelled from the chamber and wherein device comprises a sensor means in order to activate the air flow means, the sensor means comprising a thermal sensor in order to activate the air flow means only when the heated air is above a first predetermined temperature, the sensor means comprising time delay means which is arranged to set a time from the deactivation of the air flow means during which the air flow means cannot be reactivated.

According to a sixth aspect of the present invention there is provided a heated air circulating device locatable above a wall mounted radiator, the device comprising a housing defining an internal chamber and an inlet provided on the housing and through which air heated by the radiator enters the chamber, the housing comprising an outlet through which air is expelled from the chamber and wherein the inlet comprises guide means to guide the heated air through the inlet and into the chamber and in which the guide means is arranged to increase the pressure of the heated air as it passes through the inlet.

Preferably the guide means define a Venturi inlet.

Preferably the pressure of the heated air is arranged to decrease as it enters the chamber.

Preferably the inlet comprises a continuous slot which extends along the full length of the housing.

### Brief description of the drawings

The present invention will now be described, by way of example only, and with reference to the accompanying drawings, in which:
Figure 1a shows a top perspective view of a heated air circulating device according to a first embodiment of the present invention;
Figure 1b shows a bottom perspective view of the heated air circulating device of Figure 1a;
Figure 2 is a schematic drawing of the heated air circulating device of Figure 1 shown mounted above a radiator against a wall, and indicating the flow of heated air through the device;
Figure 3 shows an end portion of an elongate member of a heated air circulating device according to a second preferred embodiment of the invention;
Figure 4 shows a closed end cap suitable for fitting to an end of the elongate member of Figure 3;
Figure 5 shows an end cap suitable for fitting to an end of the elongate member of Figure 3, the end cap having apertures to allow air to flow through the end cap;
Figure 6 shows an alternative design of an end cap, similar to that of Figure 5, suitable for fitting to an end of the elongate member of Figure 3 and having apertures to allow air to flow through the end cap;
Figure 7 shows a fan unit for fitting into an end portion of an elongate member of a heated air circulating device according to the present invention;
Figure 8 shows a fan unit secured in the end portion of an elongate member and having a switch, indicator LED and a display panel;
Figures 9a and 9b show a thermal sensor and insulating cover, the thermal sensor being removed from and within the cover respectively;
Figure 10 shows a portion of an elongate member of a heated air circulating device according to a further embodiment of the present invention, the elongate member having curved baffle members forming a constricted inlet;
Figure 11 shows a portion of an elongate member similar to that shown in Figure 10, the elongate member having a substantially circular cross-sectional shape;
Figure 12 is a perspective view of an embodiment of a fan unit assembly;
Figure 13 is a cross-section of part of an embodiment of a fan unit assembly;
Figure 14 is a perspective view of a vibration isolator for an embodiment of a fan unit assembly;
Figure 15 is perspective view of an embodiment of a housing including two sections and a connector;
Figure 16 is a cross-section if a fan mounted in a noise reducing mounting;
Figure 17 is a perspective view of a preferred embodiment of a noise reducing mounting;
Figure 18 is a cross-section of part of a preferred embodiment of a noise reducing mounting;
Figure 19 is a front view of another embodiment of a noise reducing mounting;
Figure 20 is a cross-section of a fan mounted within another embodiment of a noise reducing mounting;
Figure 21 is a cross section of a further embodiment of a noise reducing mounting;
Figure 22 is a perspective view of an end of a heated air circulating device including an adjustable end vented cap;
Figure 23 is a perspective view of an end of a heated air circulating device including a damper ring; and
Figure 24 is a side view of an end of a heated air circulating device including a damper ring.

### Description of the Preferred Embodiments

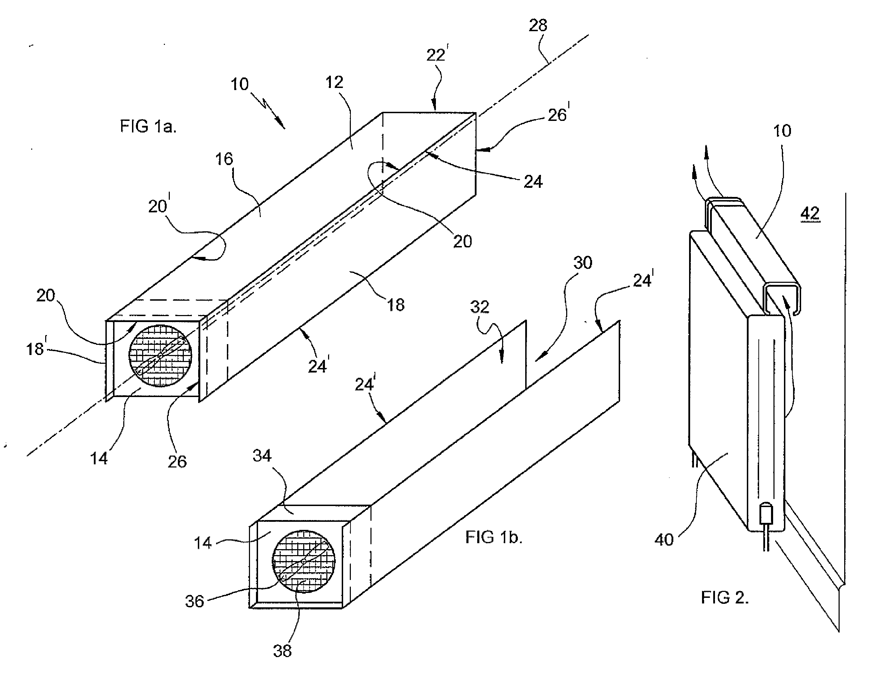

Figure 1 a and Figure 1b show a heated air circulating device 10 according to a first embodiment of the present invention. The heated air circulating device 10 comprises a housing in the form of an elongate member 12 and a fan unit 14. The elongate member 12 comprises an upper plate 16 and two walls 18, 18'. In this example, the upper plate 16 is substantially rectangular and has two parallel, opposing long edges 20, 20' and two parallel, opposing short edges 22, 22'.

Each of the walls 18, 18' are also substantially rectangular and have two parallel, opposing long edges 24, 24' and two parallel, opposing short edges 26, 26'. The walls 18, 18' are joined to the long edges 20, 20' of the upper plate 16 by their corresponding long edges 24, and extend perpendicular to the upper plate 16. In this way, the cross-section of the elongate member 12 perpendicular to its longitudinal axis 28 is substantially U-shaped.

Preferably, the walls 18, 18' and upper plate 16 are integrally formed. For example, the elongate member 12 may be formed from a sheet of a plastics or metal material and bent at approximately right angles to form each of the long edges 20, 20'. In alternative embodiments, the sheet may be bent through an angle (not necessarily a right angle) in order to form the elongate member 12.

Preferably the elongate member 12 is made from a rigid or semi-rigid plastics material, for example polypropylene. This would, alternatively, allow the elongate member 12 to be formed by an extrusion process. However, depending on the application, the elongate member 12 may be formed from any other suitable material, for example metal or ceramic.

The upper plate 16 and walls 18, 18' of the elongate member 12 define a channel 30 between the two walls 18, 18'. In this example, the long edges 24' of each of the walls 18, 18' are free edges and define an inlet 32 or mouth to the channel 30 therebetween. The spacing between the edges 24' is substantially the same along the full length of the elongate member 12, and as such, the inlet or slot 32 is continuous for the full length of the elongate member 12. Accordingly, the heated air circulating device 10 comprises a sole or single heated air inlet 32. This maximises the intake of air along the length of the device 10 which may otherwise be inhibited or restricted if the inlet comprised a series of apertures provided in a lower wall. In addition, the use of a series of apertures creates significant turbulence in the incoming heated air which thereby restricts and hinders the subsequent flow of heated air along the chamber of the device 10.

The present invention provides a heated air circulating device 10 having a full length, parallel air entrainment aperture 32. This aperture or slot 32 has a constant width along the full length of the device 10 and provides a balanced airflow input. In addition, since the air entrainment aperture comprises a single or sole slot having a uniform cross-section, this makes the housing 12 of the device easy, quick and cheap to manufacture. In particular, the housing 12 including the slot 32 may be formed as an extruded article which thereby decreases the cost of manufacture of the housing.

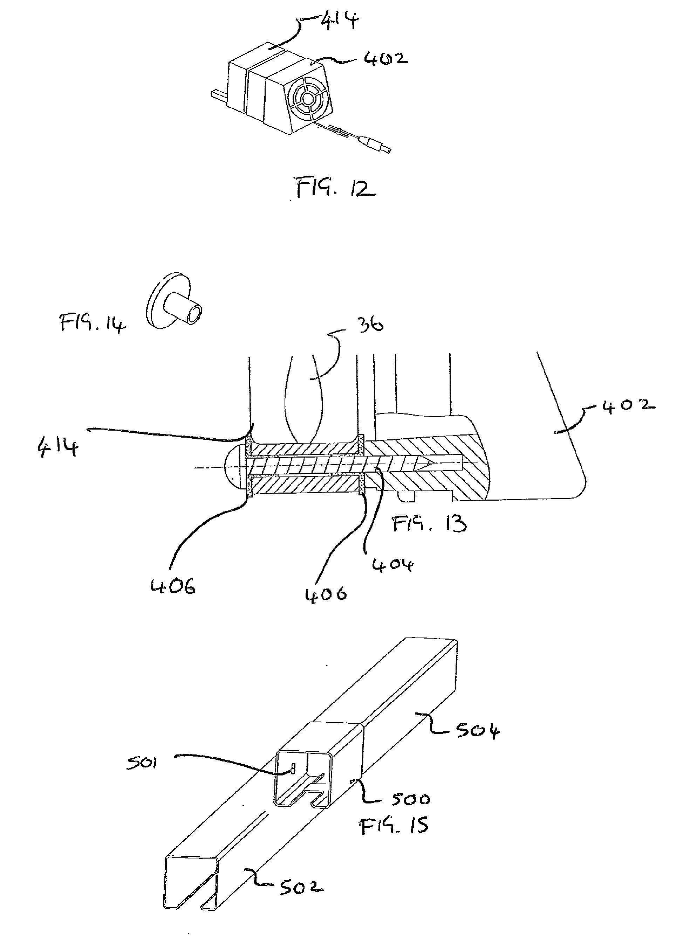

A fan unit 14 is secured proximal one end of the elongate member 12 between the two walls 18, 18'. The fan unit 14 may be permanently fixed within one end portion of the channel 30, for example using adhesive to secure the fan unit 14 to the internal surfaces of the upper plate 16 and walls 18, 18'. Alternatively, the fan unit 14 may be secured in place using other fixing means, for example screws or retaining clips. As shown in Figure 12 and Figure 13, the fan unit 414 may be secured to an outer end cap 402 using a screw(s) 404. The or each screw 404 may comprise a self tapping screw 404 which is located within a silicon rubber member 406 (see Figure 14) in order to provide vibration isolation from the housing 12. The assembly including the fan unit 414 and the outer end cap 402 can be inserted and retained in position using any suitable securement means.

The fan unit 14 may be removable from the elongate member 12 for repair, replacement, or for storage.

The fan unit 14 comprises a fan housing 34 containing a fan 36. Preferably, the fan housing 34 includes a protective grille or mesh 38 in at least a part of one face to prevent objects touching the blades of the fan 36.

In the preferred embodiment, the plane of the fan is perpendicular to the longitudinal axis of the housing. However, it is appreciated that the fan could be mounted in other planes in order to provide the air flow along the chamber of the housing. In addition, the preferred embodiment comprises a single fan mounted towards one end of the housing but other embodiment may include a fan mounted at both ends of the housing.

In one embodiment, the heated air circulating device 10 may include two fans (or more) in which a first fan is located behind a second fan. Accordingly, the fans are effectively in parallel. The first fan draws air from the plenum chamber and drives the air into the second fan which then expels the air outwardly. This arrangement assists the air flow with minimal noise since this arrangement assists in the smooth operation of air movement.

In use, the heated air circulating device 10 is positioned above a radiator 40, or other similar heating source, as shown in Figure 2. Typically the radiator 40 will be positioned against a wall 42, however, there will usually be a gap between a rear face of the radiator 40 and the wall 42. The heated air circulating device 10 is positioned so that at least part of the inlet 32 of the elongate member 12 is located above the gap between the radiator 40 and the wall 42.

Warm air heated by the rear face of the radiator 40 rises and enters the heated air circulating device 10 through the inlet slot 32 and, in particular, the heated air passes through the slot 32 and into the chamber defined by the housing 12. When the fan 36 is switched on, the warm air is drawn along the channel 30 or chamber by the fan 36 and forced out of an end of the elongate member 12. The fan 36 also creates a region of lower pressure in the channel 30 which causes more warm air to be drawn in through the inlet 32.

The fan 36 may be switched on manually by a user, or alternatively, the fan 36 may be switched on automatically, for example when the temperature of the air reaches a predetermined value. This will be discussed in more detail below.

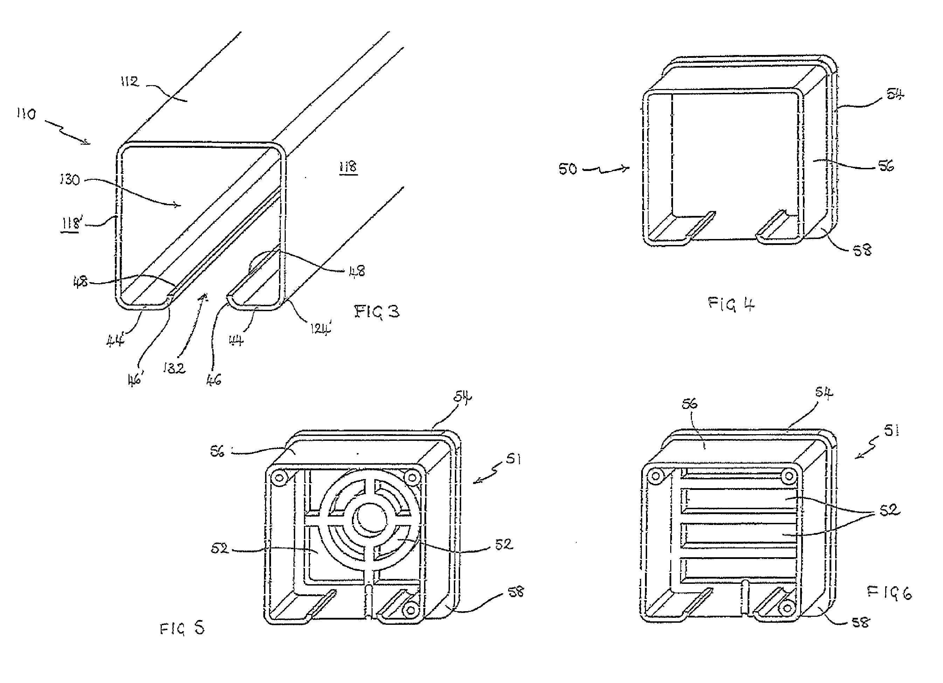

A second embodiment of the elongate member 112 is shown in Figure 3. In this example, a flange 44, 44' extends from the edge 124' of each wall 118, 118' along the full length of the elongate member 112. The flanges 44, 44' extend inwards and perpendicular to the walls 118, 118'. In this way the flanges 44, 44' act as guide means and narrow the inlet 132 of the heated air circulating device 110. In particular, the free long edges 46, 46' of the flanges 44, 44' define the edges of the slot 132.

The flanges 44, 44' may extend the same distance, so that the slot 132 is centred with respect to the two walls 118, 118'. Alternatively, the flanges 44, 44' may extend different distances so that the slot 132 is offset from the centre. For example, flange 44 may be wider than flange 44', such that the slot 132 is closer to the wall 118'. This has the advantage that, when positioning the heated air circulating device 110 above a radiator 40 the wider flange 44 may be seated on top of the radiator 40 so that the inlet slot 132 is located over the gap between the radiator 40 and the wall 42.

The flanges 44, 44' may also include a lip 48 extending from the long edge 46. Preferably each lip 48 is curved so that the lip 48 extends into the channel 130. This narrowing of the slot 132 aids air entry into the heated air circulating device 110 because as the warm air passes through the narrowed inlet 132 the speed of air flow increases. This causes a decrease in pressure at the inlet 132, which draws more air towards the inlet 132 from beneath the elongate member 112.

Figures 4 to 6 show examples of end caps designed to cover one or both ends of the elongate member 112 shown in Figure 3. A solid end cap 50 is shown in Figure 1. For applications in which only one fan unit 14 is installed at a first end of the elongate member 112, the solid end cap 50 may be used to close the second end of the elongate member 112. This may be particularly advantageous, for example, if the heated air circulating device 110 is placed above a radiator 40 located near a corner of a room, so that heated air only exits the elongate member 112 at the end furthest from the corner.

Figure 5 and Figure 6 show examples of vented end caps 51. The vented end cap 51 of Figure 5 has a number of apertures 52 in a concentric circular arrangement, and the vented end cap 51 in Figure 6 includes rectangular apertures 52. The vented end caps 51 are typically placed at an end of the elongate member 112 proximate a fan unit 14. The vented end cap 51 allows air flow through the end cap so that warm air may be expelled from the ends of the heated air circulating device 110, but they also act as a guard, preventing any items accidentally interfering with or becoming caught in the fan 36. The vented end caps 51 may include apertures 52 of any size and shape as long as they are sufficient to allow heated air to pass out of an end of the heated air circulating device 110.

The end caps 50, 51 comprise a face plate 54 with or without apertures 52, as described above, and engaging means 56. In the embodiments shown in Figures 4 to 6, the end caps 50, 51 are designed to push fit into the end of the elongate member 112 and the engaging means 56 comprises walls 56 extending from a rear surface of the face plate 54. The walls 56 extend substantially perpendicularly from the face plate 54 and extend around at least three sides of the face plate 54. The walls 56 are inset from the edges of the face plate 54 such that an outer region 58 of the face plate 54 extends around the periphery of the walls 56.

In the embodiments shown in Figures 4 to 6, the walls 56 also extend along a portion of a fourth side of the face plate 54, such that the shape of the walls 56 is substantially the same as the shape of the upper plate 16, walls 18, 18' and flanges 44, 44' of the elongate member 110. The walls 56 of the end cap 50, 51 are located on the face plate 54 so that the dimensions of the outer periphery of the walls 56 are just slightly smaller than the inner dimensions of the elongate member 110.

In this way, when an end cap 50, 51 is inserted into an end of the elongate member 110, there is a push fit between the walls 56 of the end cap 50, 51 and the elongate member 110 so that the outer surfaces of the end cap walls 56 and the inner surfaces of the elongate member 110 are at least partially in contact. Additionally, the outer region 58 of the rear surface of the face plate 54 abuts the end of the elongate member 110. In some embodiments, the end cap 50, 51 may include other or additional attachment means, for example clips or screws for attaching the end caps 50, 51 to the elongate member 110. In some embodiments it may be preferable for the end caps 50, 51 to be fixed to the elongate member 110 with, for example, an adhesive or similar.

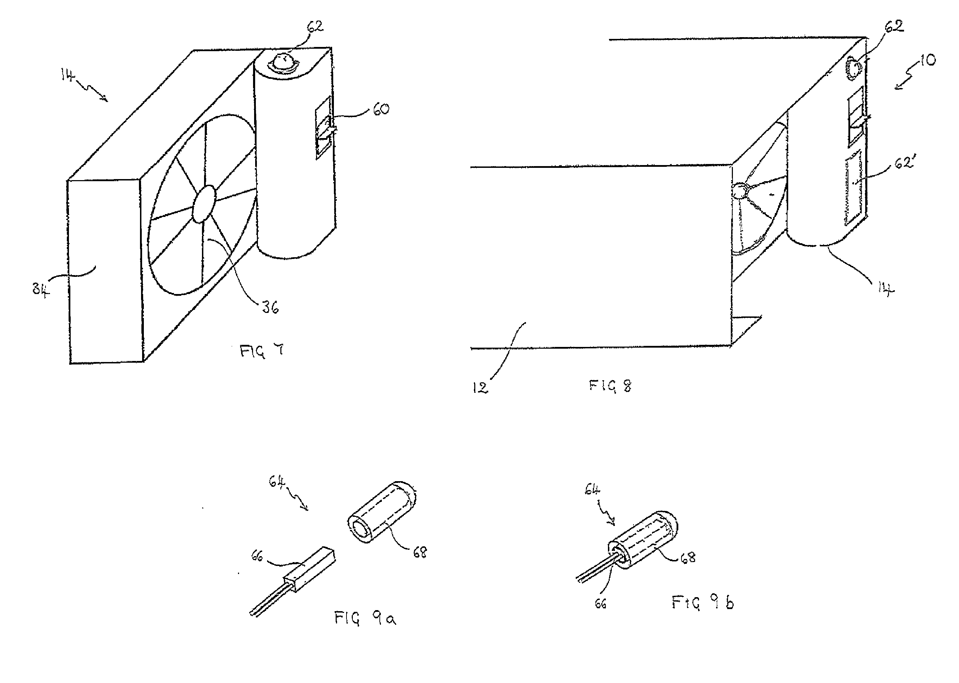

Figure 7 shows an example of a fan unit 14 that may be installed in one or both ends of a heated air circulating device 10, as also shown in Figure 8. The fan unit 14 comprises a fan housing 34 containing a fan 36. The power for the fan unit 14 may be provided by a mains supply (not shown) or alternatively may be provided by batteries (not shown) included within the fan unit 14. Accordingly, the fan 36 may be powered by an AC or a DC electric power supply. The fan 36 comprises a low voltage electric fan. Additionally, the fan unit 14 preferably includes a switch 60 for switching the fan unit 14 on and off. Furthermore, the speed of the fan 36 may be variable and a user may be able to use a control know to increase or decrease the speed of the or each fan36.

The fan unit 14 further comprises indicating means 62 for indicating the status of the fan unit 14. In this embodiment, the indicating means 62 comprises a light emitting diode (LED) protruding from an upper surface of the fan unit 14. The indicating means 62 may be designed so that the LED emits light of a first colour, for example red, when power is being supplied to the fan unit 14 but the fan is not operational and emits light of a second colour, for example green, when the fan 36 is operational. Alternatively the indicating means 62 may comprise a display 62', for example a liquid crystal display (LCD) panel 62', which shows the status of the fan unit 14 (e.g. ON / STANDBY). The panel 62' may also display the current temperature.

In addition, or alternatively, the indicating means may comprise audible means. The audible means may signal when the power is initially switched on and/or when the fan becomes operational. This may ensure that the user is aware that the device is working and is not faulty and/or assures the user that power is reaching the device.

A thermal switch device 64, or thermostat, is preferably included in the fan unit 14 to switch on the fan 36 when the temperature reaches a predefined value. Typically this predefined value will be set during manufacture of the fan unit 14 and stored within a memory unit of circuitry (not shown) used to control the operation of the fan unit 14. Alternatively, the fan unit 14 may include user input means (not shown) to allow a user to set the temperature at which the fan 36 switches on. Accordingly, the heated air circulating device 10 may include a variable control to set the fan activation temperature. For example, in new/modern homes, the radiators may individually only generate a small amount of heat and they may not achieve a very high temperature. In this situation, the radiators may never activate the fan unless the heated air circulating device 10 is set to activate at a relatively low temperature. Accordingly, a variable thermostatic switch could be used to set the activation temperature. The difference between the activation and the deactivation temperature may be the same such that the dwell time (see below) is the same. In addition, in hot countries, there is a chance that the ambient temperature may be sufficient to activate the fan 36. Accordingly, a variable control system to set the activation temperature may be useful.

In use, when the heated air circulating device 10 is positioned above a radiator 40, as the radiator 40 heats up, the temperature rises quickly. When the temperature reaches the predefined value, the fan 36 switches on and expels warm air from the ends of the elongate member 12.

Accordingly, the heated air circulating device may be arranged to only operate when the thermal switch detects that the heated air is above a predefined temperature. Accordingly, the fan is not continuously operating but only operates when the radiator is providing heated air above a specific temperature.

In a preferred embodiment, the thermal switch device 64 comprises a thermal switch 66 enclosed by an insulating cover 68 as shown in Figures 9a and 9b. The insulating cover 68 may be a silicone rubber jacket. When the heated air circulating device 10 is positioned above a radiator 40, as the temperature rises quickly there is minimum insulating effect from the cover 68 and the fan 36 is switched on when the temperature reaches the predefined value. As the temperature of the radiator 40 drops, the temperature change is slower and the thermal insulating properties of the cover 68 means that there is a time delay before the temperature within the cover 68 drops to below the predefined value. Accordingly, this silicon insulating cover prevents the dwell system from chasing itself by continuously switching the fan on and off.

This delay, or dwell system, means that a single predefined temperature may be used to determine when the fan 36 switches on and off. Without the insulating cover 68, as the temperature drops slowly, small fluctuations in temperature may cause the fan 36 to be switched on and off repeatedly around the predefined temperature. The insulating cover 68 surrounding the thermal switch 66 effectively acts as a buffer, lessening the effect of the temperature fluctuations, so that the temperature within the cover 68 remains more stable.

Alternatively, the thermal switch device 64 may comprise circuitry for providing a time delay between the fan 36 switching on and off. In particular, the circuitry may include a timer device (not shown) providing a preset delay so that after the fan 36 has switched on it does not switch off until the preset time has elapsed. In addition, or alternatively, a time delay could be used so that once the fan 36 has switched off due to a drop in temperature, a certain time must elapse before the fan 36 is able to be switched on again. Typically, the delay time would be set between 10 seconds and 5 minutes.

The use of a time delay allows temperature variances throughout a cooling radiator to dissipate more easily without continually activating the thermal switching system.

In a preferred embodiment, the thermal switch 66 comprises a bimetallic strip. The bimetallic strip comprises two metals having different coefficients of thermal expansion that are bonded together along their length. As the temperature changes, one of the two metals will tend to expand or contract to a greater extent that the other metal. However, because the two metals are bonded together, this causes the strip to bend. For example, as the temperature rises, the strip will bend towards the side having the metal with the lower coefficient of thermal expansion.

This bending, or curvature, may be used to cause the strip to make or break contacts to operate a switch to switch the fan 36 on at a given temperature. Careful choice of metals and design of the shape of the bimetallic strip means that the thermal switch 66 can be designed to operate at the required temperature. Additionally, the switch may be designed to have a relatively large hysteresis, so that a temperature change of a few degrees is required before the movement of the strip is sufficient to make or break the contacts. This hysteresis may be caused by the choice of the combination of the metals used or the shape of the bimetallic strip. Means for altering the hysteresis characteristics of a bimetallic strip are well known to those of skill in the art.

In an alternative embodiment, the thermal switch device 64 may include means for providing a first preset temperature value and a second preset temperature value. The thermal switch device 64 is then arranged such that the fan 36 switches on when the temperature reaches the first preset temperature and switches off when the temperature reaches the second preset temperature. The first preset temperature will typically be a few degrees higher than the second preset temperature. In a preferred embodiment the difference between said first and second preset temperatures is at least 4 °C, for example the on temperature may be 28 °C and the off temperature may be 24 °C.

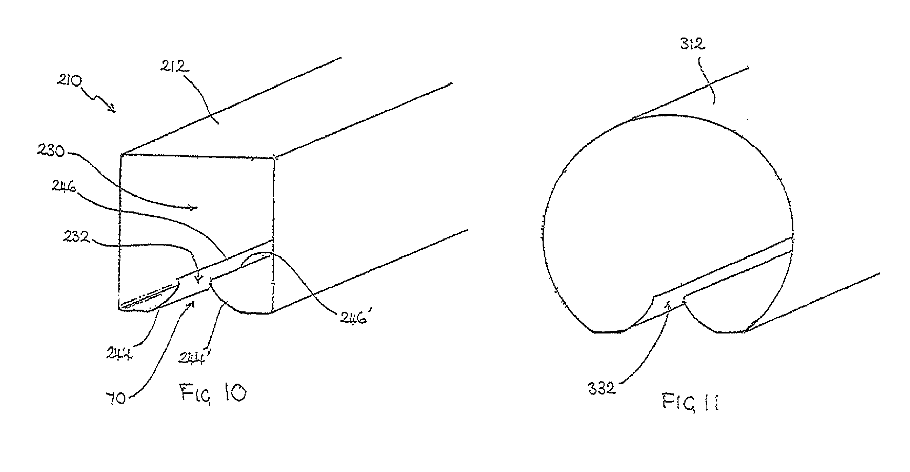

Alternative embodiments of elongate members 212, 312 for heated air circulating devices 10 are shown in Figure 10 and Figure 11.

Figure 10 shows an elongate member 212 having a substantially rectangular cross-section, similar to the elongate member 112 previously described. In this example, the flanges 244, 244' are designed to form a Venturi throat. The flanges 244, 244' are substantially curved and extend inwards towards a central portion of the elongate member 212. The spacing 232 between the long edges 246, 246' of the flanges 244, 244' forms a Venturi throat and the inlet 232 of the heated air circulating device 210. Preferably the width of the inlet 232 is substantially smaller than the width of the elongate member 212. For example, the width of the inlet 232 may be less the one quarter of the overall width of the elongate member 212.

The curvature of the flanges 244, 244' creates an inlet region 70 ahead of the Venturi throat 232. Preferably the flanges 244, 244' form a smooth arc shape so that air flows smoothly into the heated air circulating device 210, and in particular so that the heated air is compressed smoothly before passing through the Venturi throat 232. In this way the flanges 244, 244' form a critical flow nozzle that minimises turbulence of the air entering the heated air circulating device 210 and increases the speed of the air passing through the inlet throat 232. This creates more efficient air flow into the device 210 and subsequently optimum air flow through the channel 230 of the elongate member 212.

Once air entering the heated air circulating device 210 has passed through the Venturi throat 232, the air expands to fill the channel 230 of the elongate member 212. This expansion creates a region of lower air pressure. This causes more air to be drawn into the channel 230 through the inlet 232.

Preferably the shape of the Venturi inlet 232 would be 'tuned' for different applications depending on the exact shape and size of the heated air circulating device 210. This tuning process may include the use of formulae similar to those already established and well known to those of skill in the art, for example Smith-Matz circular-arc Venturi.

In addition to improving and maximising air flow into the channel 230, the shape and size of the Venturi inlet 232 would be designed to minimise air movement noise levels and to avoid the natural resonant frequencies of any parts of the heated air circulating device 210.

As explained above, the system uses the Venturi effect including an upstream compression zone in the air entrainment aperture between the guides and a downstream expansion zone within the chamber once the heated air has passed through the Venturi throat. This minimises the turbulence and stalling of the air flow either of which can reduce and/or inhibit performance of the fan/chamber arrangement. Some embodiments of the present invention use a critical-flow nozzle Venturi design which attempts to maximise the velocity at the throat and providing the optimum air flow through the device. The specification can be adjusted for different designs in order to maximise the air flow for each design. This would also be used to minimise air movement noise levels and to avoid the natural resonant frequencies of the chamber, fan assembly and any other component.

Figure 11 shows an elongate member 312 similar to that shown in Figure 10, but in this embodiment the upper plate and walls of the elongate member are integral and continuously curved. In this way, the cross-sectional shape of this elongate member 312, perpendicular to its longitudinal axis is substantially circular, or C-shaped. In embodiments in which the flanges are also curved to form a Venturi inlet 332, the cross-sectional shape may be described as a rounded heart-shape, or cardioid, with the inlet 332 being formed along the cusp.

The device and, in particular, the housing may be of a fixed length and thereby designed for use with radiators of a particular length. It is appreciated that the devices will still function and operate with radiators of differing lengths but the performance of the device will not be optimal. Alternatively, the device and, in particular, the housing may be telescopic such that the housing comprise at least two section. These housing sections may be arranged to slide relative to each other such that one section partially locates in another section to decrease the overall length of the housing. This also means that the housing can be compact for packing and shipping purposes whilst one single device is extendable to fit all sizes of radiators.

In a further embodiment, the heated air circulating device 10 comprises at least two housing sections 502, 504 that are connected together by a connector 500, as shown in Figure 15. The connector 500 includes an abutment stop 501 in order to ensure that each housing section 502, 504 is inserted partially into the connector 500 in order for a secure connection to be made. The connector may also comprise further fittings to ensure that the housing sections are retained in position. It will be appreciated that the device may comprise any suitable number of housing section connected together by connectors 500, for example, 2, 3 or 4 or more housing sections. In an alternative embodiment the housing section may be pivoted or hinged relative to each other.

The housing may be of any suitable cross-section and whilst the preferred embodiment comprises a substantially square cross-section, the housing may have a substantially circular, triangular or trapezoid cross-section.

In one embodiment, the end mounting for the fan may be integral with the housing of the device 10. In this embodiment, the end housing(s) may be moulded with the housing of the device. Accordingly, the fan would be an integral part of the device rather than a separate component. The fan consists of a blade moulded or mounted around a motor which in turn fits into a bearing. This is all then fitted within a housing or cage to create a universal fan assembly. This embodiment does not require a universal fan assembly but uses a dedicated fan assembly or component.

The heated air circulating device is totally hand portable and requires no fixtures, for example brackets. Accordingly the device is very adaptable and can be rapidly installed or removed from a particular location.

The heated air circulating device is always laid on top or positioned on top and partially behind the associated radiator. The heated air circulating device only acts on the heated air generated or originating from the top and/or the rear of the radiator and does not act on the heated air generated from the front of the radiator which is free and unrestricted and can flow as usual from the radiator around the room.

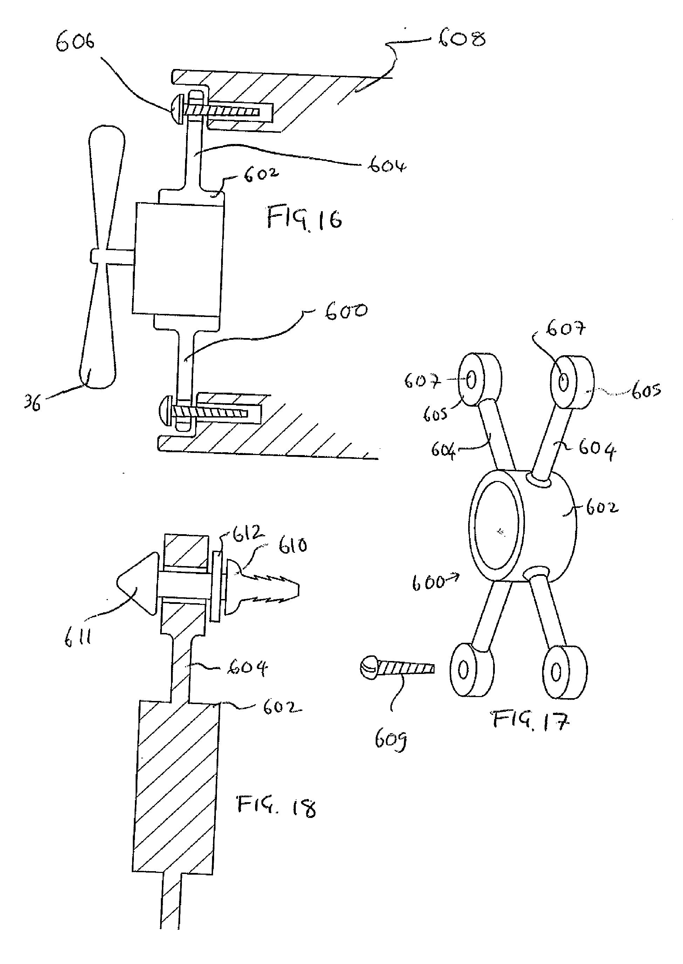

As shown in Figure 16, Figure 17 and Figure 18, the fan 36 of the heated air circulating device 10 could be mounted within a noise reducing mounting 600. The noise reducing mounting 600 provides isolation means to isolate the motor to thereby prevent vibrations being dissipated from the fan 36 to the elongate member 12 and the radiator. Any such vibrations from the fan 36 may be amplified in the elongate member 12 and/or the radiator 40 and may produce unwanted noise. One aim of the noise reducing mounting is to reduce noise being formed between the fan housing and the chamber and/or the housing and the mounting surface.

The noise reducing mounting 600 comprises a resilient frame and may comprise a rubber frame. The preferred embodiment of the frame includes a central annular shroud 602 which is arranged to encompass the central hub of the fan 36. The frame also includes four leg members 604 which extend radially outwardly from the shroud 602. At the end of each leg member 604, there is provided a fixing portion 605 which provide a fixing aperture 607. A suitable fixing member 609 can then be used to fix each leg member within an end cap housing 608. As shown in Figure 18, the noise reducing mounting 600 may be clipped into the housing using a solid mount and, in particular, may be pushed on to rigid pin 610 provided by the housing. In addition, the rigid pins 610 may also include washers 612 in order to help further isolate any vibrations. In order to mount the fan 36, the head 611 of each rigid pin 610 is forced through the fixing apertures 607 provided on the fixing portions 605.

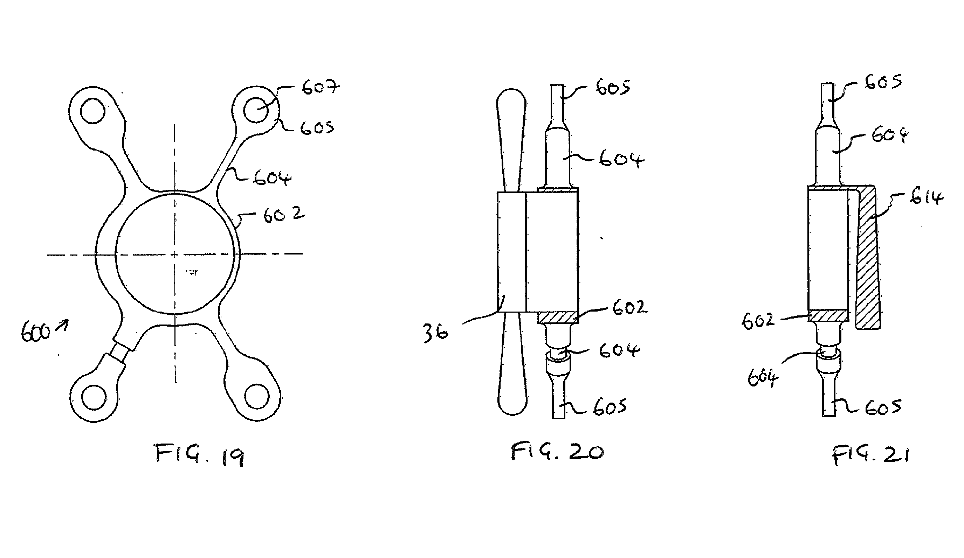

In another embodiment of the noise reducing mounting 600, as shown in Figure 19 and Figure 20, the frame comprise a "spider web" having four leg members 604 of different lengths and which are irregular in shape. In addition, the central annular shroud 602 varies in thickness around the circumference thereof. These inconsistencies and irregularities help to dissipate the vibrations and in particular, help to dissipate vibrations over a range of frequencies.

The noise reducing mounting 600 may also include a damper 614 as shown in Figure 21. The damper 614 comprises a mass damper which is suspended from the frame and in particular from the central annular shroud 602. The mass damper 614 is arranged to counteract any vibrations produced by the fan 36 and helps to reduce the noise of the unit.

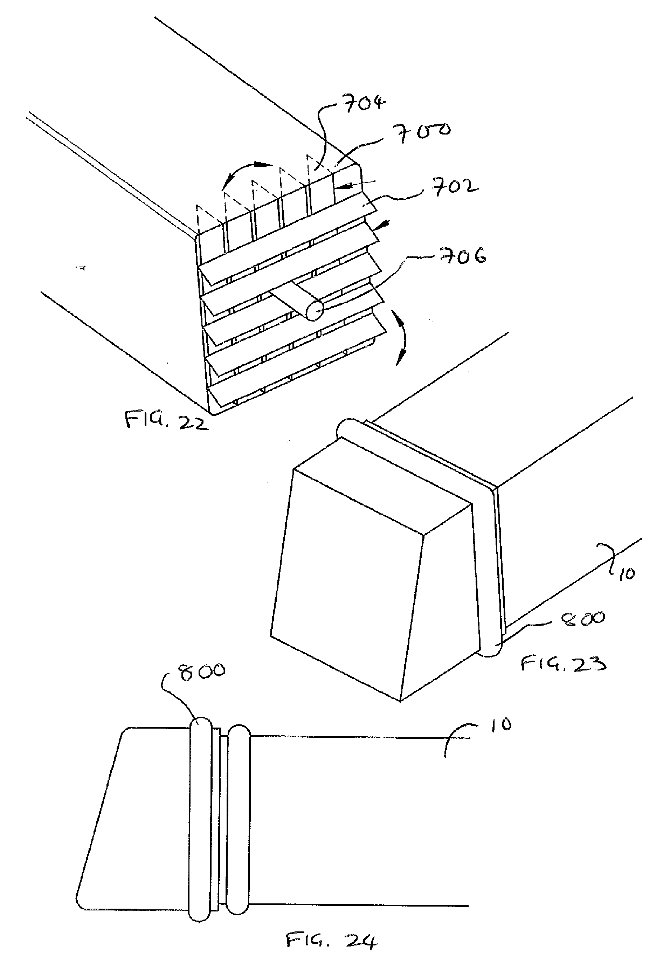

As shown in Figure 22, the vented end cap 700 may be directional such that a user can direct the air flowing out of the heated air circulating device 10. The directional vented end cap 700 includes a first set of directional guides 702 and may include a second set of directional guides 704. Both sets of guides 702, 704 are manually adjustable by the user in order for the user to direct the air flow. The first set of guides 702 may be arranged to direct the air in a vertical plane such that the air flow could be directed upwardly or downwardly. The user may be able to simply hold a guide 702 in order to adjust the angle of each guide 702 in the first set. The second set of guides 704 may be arranged to direct the air in a horizontal plane such that the air flow could be directed to the left or the right. The user is able to hold a control knob 706 in order to simultaneously adjust the angle of each guide 704 in the second set. This directional air flow may enable a user to direct the heated air to a particular location for a particular reason. For example, the heated air could be directed to wards damp washing in order to help dry the clothes.

As shown in Figure 23 ands Figure 24, the heated air circulating device may include a damper ring 800. The heated air circulating device 10 may include such a damper ring 800 at or towards each longitudinal end thereof. The heated air circulating device may be arranged to be placed on the top of a radiator 40. Accordingly, such an arrangement provides the opportunity for vibrations and noise to be transmitted. The damper ring(s) 800 thereby reduce the transmission of noise between the heated air circulating device 10 and the radiator 40. In addition, the damper ring(s) 800 will also reduce any noise being transmitted to any further potentially contacting surfaces, for example adjacent walls. The damper ring(s) 800 may comprise a simple silicon band (or other flexible/resilient material) which is simply stretched around the outer periphery of the heated air circulating device 10 such that the damper rings stand proud of the housing of the heated air circulating device 10.

## Claims

1. A heated air circulating device locatable above a wall mounted radiator, the device comprising a housing defining an internal chamber and an inlet provided on the housing and through which air heated by the radiator enters the chamber, the housing comprising an outlet through which air is expelled from the chamber and wherein the inlet comprises a continuous slot which extends along the full length of the housing.

2. A heated air circulating device according to Claim 1 in which the housing comprise guide means to guide the heated air through the slot into the chamber.

3. A heated air circulating device according to Claim 2 in which the guide means comprises two opposed flanges which guide the heated air into the chamber, in which a first flange projects inwardly from a lower part of a first side wall of the housing and a second flange projects inwardly from a lower part of a second side wall of the housing and wherein the first flange projects inwardly from the first side wall towards the second side wall and the first flange also comprises a section which is angled upwardly towards the chamber and the second flange projects inwardly from the second side wall towards the first side wall and the second flange also comprises a section which is angled upwardly towards the chamber.

4. A heated air circulating device according to Claim 3 in which the slot is defined between the first flange and the second flange and the width of the slot is arranged to narrow from the outside in to the chamber defined by the housing and wherein the first flange and the second flange define a Venturi inlet therebetween.

5. A heated air circulating device according to any preceding claim in which the slot is arranged to increase the pressure of the heated air as it passes through the slot.

6. A heated air circulating device according to Claim 5 in which the pressure of the heated air is arranged to decrease as it enters the chamber.

7. A heated air circulating device according to any preceding claim in which the housing comprises an extruded member.

8. A heated air circulating device according to any preceding claim in which the heated air circulating device comprises air flow means, the air flow means being retained within a noise reducing mounting in which the noise reducing mounting comprises a resilient frame having a plurality of legs which are arranged, in use, to extend outwardly from the air flow means.

9. A heated air circulating device according to any preceding claim in which the heated air circulating device comprises a sensor means in order to activate air flow means, the sensor means comprising a thermal sensor in order to activate the air flow means only when the heated air is above a first predetermined temperature, wherein the sensor means is arranged to deactivate the air flow means when the temperature falls below the first predetermined temperature and wherein the sensor means comprise a thermal sensor located within insulating means and in which the insulating means is arranged to retain heat adjacent to the thermal sensor in order to delay the deactivation of the air flow means as the heated air and/or radiator is cooling.

10. A heated air circulating device according to any preceding claim in which the device comprises sensor means including a dwell system in order to prolong the activation time as the radiator is cooling and/or delay the deactivation of the air flow means.

11. A heated air circulating device according to Claim 9 or Claim 10 in which the heated air circulating device comprises a sensor means in order to activate air flow means, the sensor means comprising a thermal sensor in order to activate the air flow means only when the heated air is above a first predetermined temperature and the sensor means is arranged to deactivate the air flow means when the temperature falls below a second predetermined temperature and wherein the second predetermined temperatures is lower than a first predetermined temperature.

12. A heated air circulating device according to any one of Claim 9 to Claim 11 in which the sensor means comprises time delay means which is arranged to set a time from the deactivation of the air flow means during which the air flow means cannot be reactivated.

13. A heated air circulating device according to any preceding claim in which the housing comprise an end member at one or both ends thereof and wherein the end member comprises a vented end member in order to allow airflow out of the respective end of the housing.

14. An assembly comprising a radiator and a heated air circulating device locatable above the radiator, wherein the radiator is arranged, in use, to be mounted on a wall, the device comprising a housing defining an internal chamber and an inlet provided on the housing and through which air heated by the radiator enters the chamber, the housing comprising an outlet through which air is expelled from the chamber and wherein the inlet comprises a continuous slot which extends along the full length of the housing.

15. A method of circulating heated air comprising locating a heated air circulating device above a wall mounted radiator, drawing heated air through an inlet in the device in order for the air to pass into an internal chamber defined in a housing of the device and to then be expelled from an outlet, wherein the inlet comprises a continuous slot which extends along the full length of the housing.
